# FASCICULE DE BREVET EUROPEEN

(11) **EP 1 414 656 B1**
(45) Date de publication et mention de la délivrance du brevet: **15.02.2006**
(21) Numéro de dépôt: 02751161.7
(22) Date de dépôt: 25.07.2002
(51) Int. Cl.: B60C 15/024

(54) **BOURRELET DE PNEUMATIQUE AVEC NERVURE DE PROTECTION**
LUFTREIFENWULST MIT SCHUTZRIPPE
TYRE BEAD WITH PROTECTIVE RIB

(30) Priorité: 31.07.2001 FR 0110296
(43) Date de publication de la demande: 06.05.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: EYNARD, Claude, F-63530 Chanat-la-Mouteyre (FR); PEYROT, André, F-63100 Clermont-Ferrand (FR); BOUVIER, Jean-Luc, 63530 ENVAL (FR); JARA, Adam, F-63100 Clermont-Ferrand (FR)
(74) Mandataire: Diernaz, Christian
(86) Numéro de dépôt international: PCT/EP2002/008279
(87) Numéro de publication internationale: WO 2003/011616

(56) Documents cités:
- EP-A- 0 983 875
- US-A1- 2001 006 085
- PATENT ABSTRACTS OF JAPAN vol. 016, no. 561 (M-1341), 3 décembre 1992 (1992-12-03) & JP 04 215508 A (YOKOHAMA RUBBER CO LTD:THE), 6 août 1992 (1992-08-06)

## Description

La présente invention concerne un pneumatique à armature de carcasse radiale, en particulier, de faible rapport de forme H/S, H étant la hauteur du pneumatique sur jante et S sa largeur axiale maximale, destiné à être monté sur une jante dont au moins un siège est incliné vers l'extérieur et prolongé axialement à l'extérieur par une saillie de faible hauteur. Elle concerne plus particulièrement les bourrelets d'un tel pneumatique.

La forme extérieure d'un tel bourrelet est décrite entre autres caractéristiques dans le brevet US 6092575. La forme extérieure, et en particulier la paroi axialement extérieure, du bourrelet est axialement en retrait par rapport à l'extrémité axialement la plus à l'extérieur de la jante ; ceci a pour conséquence que les éléments métalliques axialement les plus à l'extérieur de la jante ne sont pas protégés contre les agressions causées par les trottoirs, par exemple, en roulage urbain. L'architecture particulière du bourrelet, dont le talon est axialement intérieur et la pointe axialement extérieure, est décrite dans le brevet US 6179028 : le retournement d'armature de carcasse autour de la tringle d'aricrage et d'un coin de mélange caoutchouteux de dureté élevée et de forme sensiblement triangulaire conduit à la présence d'éléments de renforcement d'armature de carcasse près de la paroi axialement extérieure du bourrelet, et en conséquence à la possibilité de blessures de tels éléments. Le fait de vouloir assurer simultanément la protection des éléments métalliques de jante et la protection des éléments de renforcement de l'armature de carcasse ont amené le déposant à adapter la forme axialement extérieure de la pointe du bourrelet, adaptation conduisant à recouvrir le bord de saillie extérieure de la jante par une masse ou protubérance de caoutchouc plus ou moins importante et de qualité appropriée, la largeur axiale maximale du contour extérieur de la pointe de bourrelet étant alors supérieure à l'encombrement ou largeur axiale maximale de la jante de montage.

Si cette protubérance protège de façon satisfaisante la saillie correspondante de la jante, elle est par contre très sensible d'une part à l'abrasion lorsque le pneumatique frotte sur un objet extérieur tel que trottoir et d'autre part à l'arrachement de morceaux de gomme suite à l'initiation et à la propagation de coupures et/ou cassures. La demande internationale PCT 99/64258 (US-A-2001006085) enseigne de munir ladite protubérance d'incisions de largeur non nulle et de profondeur au plus égale à 5 mm, ces incisions délimitant des nervures orientées sensiblement dans la direction méridienne et parallèles entre elles.

La solution décrite ci-dessus n'est pas totalement satisfaisante du point de vue arrachements de gomme, avec pour conséquence la possibilité de blessures du retournement de l'armature de carcasse, peu compatibles avec d'une part l'esthétique et d'autre part avec le besoin de sécurité, naturellement exigibles par les utilisateurs.

L'invention a pour but de proposer une solution différente pour remédier aux inconvénients décrits ci-dessus et consiste à remplacer la protubérance de bourrelet destinée à être radialement en contact avec là saillie de jante par une nervure où protubérance de protection de forme appropriée et localisée de façon également adéquate.

L'objet de l'invention est atteint par un pneumatique selon la revendication 1.

Grâce aux caractéristiques ci dessus énoncées, le pneumatique selon l'invention une fois monté sur sa jante offre une très bonne protection contre les agressions externes de ladite jante. Par ailleurs, l'éloignement de la nervure selon les mêmes caractéristiques permet d'éviter des arrachements de gomme du bourrelet, ce qui assure une pérennité de la protection.

La combinaison des caractéristiques énoncées permet, en protégeant efficacement les parties de jantes exposées à l'agression d'un objet extérieur, d'obtenir un fonctionnement du bourrelet du pneumatique satisfaisant par une flexibilité appropriée de ses bourrelets tout en évitant le risque de pinceinent de la nervure entre l'objet extérieur et la saillie de la jante.

Pour une meilleure protection, il est avantageux que la distance e soit comprise entre 1 et 1,5 mm. Préférentiellement, la longueur du segment joignant les points d'extrémité de la face axialement extérieure de la nervure de protection est comprise entre 5 et 10 mm de manière à obtenir une bonne protection de la jante sans trop augmenter le poids du pneumatique.

L'angle que fait le segment joignant les points d'extrémité de la face axialement extérieure de la nervure de protection, avec une direction perpendiculaire à l'axe de rotation, est préférentiellement au plus égal à ±5° afin d'éviter les surpressions localisées lors de contact avec un objet externe et également afin d'éviter des usures par frottement trop localisées.

La face inférieure de raccordement peut être cylindrique, tronconique ou courbe, ladite face étant réunie à la paroi du bourrelet et à la face axialement extérieure par de légers arrondis dans le but, comme connu en soi, d'éviter les concentrations de contraintes.

La face supérieure de raccordement s'étend sensiblement entre le point radialement le plus à l'extérieur de la face axialement à l'extérieur, de la nervure de protection et un point de la paroi externe du flanc du pneumatique défini comme étant à une distance radiale au moins égale à deux fois la longueur du segment joignant les points d'extrémité de la face axialement extérieure de la nervure de protection. Cette face supérieure de raccordement est préférentiellement située en totalité radialement à l'extérieur d'une droite passant par le point radialement le plus à l'extérieur de la face axialement à l'extérieur de la nervure de protection et tangente en ce point audit profil, cette droite faisant un angle au plus égal à 55° avec le plan équatorial, ce qui permet d'offrir un minimum de prise aux obstacles et ainsi de limiter leur indentation en autorisant une possibilité de glissement entre l'obstacle et la nervure de protection. Cette face supérieure de raccordement, vue en coupe méridienne, peut notamment avoir une forme d'arc de cercle.

En outre, il est avantageux de renforcer les parois externes de la nervure de protection avec au moins une armature comprenant un renfort de nature textile (par exemple Nylon®) noyé dans un mélange de caoutchouc de nature appropriée (et notamment résistant bien à l'abrasion).

Profitant de ce que la nervure de protection est décalée radialement vers l'extérieur par rapport à la saillie de jante, il a été développé une nouvelle forme de paroi externe de bourrelet qui offre l'avantage de permettre une augmentation sensible de la pression de contact entre le bourrelet du pneumatique et le siège de la jante lorsque ce dernier est incliné vers l'extérieur (c'est-à-dire lorsque le point axialement le plus à l'extérieur de sa génératrice est situé à une distance de l'axe de rotation qui est inférieure à la distance séparant le même axe du point axialement le plus à l'intérieur de ladite génératrice).

Cette augmentation de pression de contact assure une meilleure étanchéité de l'ensemble pneumatique, une meilleure tenue dudit bourrelet sur la jante et une diminution sensible des mouvements de rotation dudit bourrelet sur sa jante notamment sous l'action des forces exercées par le sol sur le pneumatique en roulage. Dans ce but, le profil, vue dans un plan de coupe méridienne, de la paroi externe du bourrelet destinée à venir en contact avec le profil interne de la saillie de jante est prolongé radialement vers l'extérieur de façon à ne pas prendre appui sur la partie radialement extérieure de ladite saillie. L'absence de contact entre le bourrelet et la partie radialement à l'extérieur de la saillie de jante permet de laisser libre un éventuel mouvement de glissement du bourrelet relativement à ladite saillie de jante dans le plan de coupe méridienne sous l'action des efforts de tension dans l'armature de carcasse ; on observe également une augmentation de la pression d'éclatement du pneumatique dès lors que cette disposition est mise en oeuvré pour les deux bourrelets du pneumatique.

Bien sûr, cette disposition concernant le profil de bourrelet peut être employée indifféremment avec ou sans la nervure de protection. Par exemple, il est possible de ne pas mettre de nervure de protection du côté du pneumatique destiné à être placé côté intérieur d'un véhicule. Il en serait de même avec un pneumatique totalement dépourvu de nervure de protection et destiné à être monté avec une jante dont les deux sièges sont inclinés vers l'extérieur.

Les caractéristiques de l'invention seront mieux comprises à l'aide des dessins, annexés à la description qui suit, et montrant des variantes de réalisation de pneumatique selon l'invention, données à titre non limitatif et selon lesquels :
La figure 1 montre une première variante de pneumatique selon l'invention ;
La figure 2 montre une deuxième variante de pneumatique selon l'invention présentant au moins sur un côté un profil de bourrelet particulier.

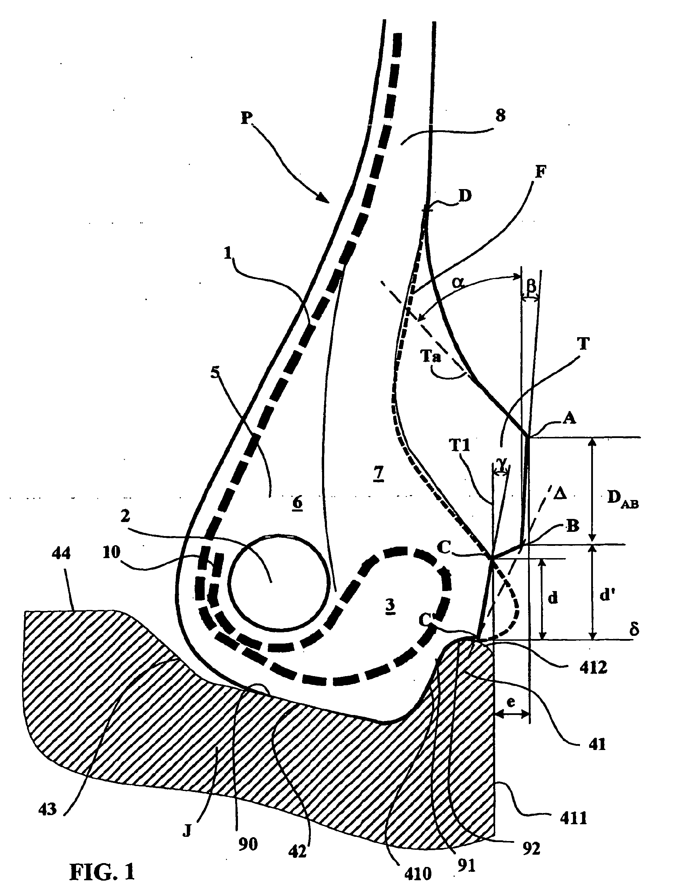

La figure 1 montre une coupe méridienne partielle et schématique d'un pneumatique P selon l'invention monté sur une jante de montage J.

Le flanc 8 et le bourrelet 5 d'un pneumatique P pour véhicule de tourisme de dimension 205-650 R 440A, montrés sur la figure 1, comprennent une armature de carcasse 1, ancrée dans le bourrelet 5 par enroulement autour d'une tringle d'ancrage 2 en allant axialement de l'intérieur du pneumatique à l'extérieur pour former un retournement 10. Ledit retournement 10 entoure en totalité un profilé 3 disposé axialement. à l'extérieur de la tringle d'ancrage 2 de l'armature de carcasse 1, ledit profilé 3 se présentant, en coupe, sous la forme d'un secteur angulaire de forme sensiblement triangulaire ayant un sommet situé approximativement radialement sous la tringle 2 (c'est-à-dire entre l'axe de rotation et ladite tringle), deux côtés partant dudit sommet et un troisième côté opposé audit sommet. Le profilé 3 est formé d'un mélange caoutchouteux, ayant à l'état vulcanisé une dureté Shore A égale dans l'exemple décrit à 95. La tringle 2 est surmontée radialement à l'extérieur d'un profilé 6 de mélange caoutchouteux de dureté Shore A, inférieure à 40. Radialement à l'extérieur du profilé 3 et axialement à l'extérieur dudit profilé 6 est disposé un autre profilé 7 de mélange caoutchouteux à faible dureté comparée à la dureté du mélange du profilé 3.

La jante J, sur laquelle est monté le bourrelet 5 décrit ci-dessus, comprend un siège tronconique 42 prolongé axialement de part et d'autre par deux faces tronconiques : axialement à l'extérieur par la face 410 d'une saillie 41 de faible hauteur et axialement à l'intérieur par la face 43 reliant ledit siège 42 à une portée 44 d'appui de soutien, ledit appui de soutien intervenant pour supporter le pneumatique en cas de perte de pression. La face 410 est prolongée par la face 412 en forme d'arc de cercle sur le plan de la figure, cette dernière face 412 se prolongeant par une face axialement externe 411.

Dans sa partie radialement à l'intérieur par rapport à la tringle 2, le bourrelet 5 du pneumatique P, montré gonflé, est en contact par son siège 90 avec le siège 42 de la jante J et axialement à l'extérieur par une paroi 91 contre la face 410 de la saillie 41. Dans le prolongement de la paroi 91 du bourrelet, une paroi 92 enveloppe partiellement la surface 412 de la saillie 41 de jante.

Selon l'invention la paroi axialement extérieure du bourrelet 5 est munie d'une nervure de protection T, délimitée à l'extérieur par trois faces qui, vues en coupe méridienne sur la figure 1, ont des génératrices AB, CB, AD, la génératrice AB reliant les deux autres génératrices CB et AD. Par commodité, les faces portent le nom de leur génératrice, par exemple, la face ayant pour génératrice la ligne AB est appelée, dans le présent document, la face AB.

La génératrice AB de la face AB axialement la plus à l'extérieur de la nervure T est dans le cas présenté un segment de droite faisant un angle β avec une perpendiculaire à l'axe de rotation du pneumatique au plus égal à 10°(dans le cas présenté, cet angle est égal à 5°); la distance D_{AB} entre les points d'extrémité A et B est préférentiellement comprise entre 5 et 10 mm. Le point A radialement le plus éloigné de l'axe de rotation est ici le point de la nervure T axialement le plus éloigné du plan équatorial.

Cette génératrice AB est réunie, radialement à l'intérieur, à la paroi du bourrelet par la génératrice BC qui est, dans l'exemple décrit, un segment de droite, ce dernier se prolongeant par un autre segment de droite CC' faisant un angle γ sensiblement égal, dans le cas présenté, à l'angle β. Ce dernier segment CC' se raccorde avec la partie 92 du bourrelet en contact avec la partie 412 radialement à l'extérieur de la saillie 41 de jante.

Le point C' correspond au dernier point de la partie 92 du bourrelet 5 pouvant venir en contact avec la partie supérieure 412 de la saillie 41 lorsque le pneumatique est gonflé.

Le point d'intersection B de la génératrice AB avec la génératrice BC est situé à une distance d' d'une droite δ parallèle à l'axe de rotation et passant par le point radialement le plus à l'extérieur de la partie supérieure 412 de la saillie 41, égale à la distance e augmentée de 6 mm. La distance e vaut dans l'exemple décrit 1,5 mm et correspond à la distance séparant axialement, dans le plan de la figure, une droite perpendiculaire à l'axe de rotation et passant par le point de la nervure T axialement le plus éloigné du plan équatorial, de la droite T1 perpendiculaire à l'axe de rotation et tangente axialement à l'extérieur à la saillie 41.

Le point C limitant la génératrice BC de la nervure T est obtenu comme étant le point d'intersection entre le profil externe du bourrelet et une droite, notée T1, perpendiculaire à l'axe de rotation et tangente à la face 411 axialement à l'extérieur de la saillie 41. Selon une caractéristique essentielle de l'invention, ce point C doit être situé radialement vers l'extérieur par rapport à une droitevirtuelle passant par le dernier point C' du bourrelet en contact avec la saillie 41 et le point B de manière à générer une souplesse de flexion du bourrelet appropriée pour éviter tout coincement de la nervure entre un obstacle externe et ladite saillie.

La distance radiale d séparant les points C et C' est notée d; préférentiellement, cette distance, d est supérieure à la distance d' séparant le point B de la droite δ diminuée de la distance axiale e.

Quant à la génératrice AD de la face AD radialement supérieure de la nervure T, elle se présente sous forme d'un arc de cercle dont le centre de courbure est situé axialement à l'extérieur du pneumatique et dont la tangente Ta au point A d'intersection entre les faces AB et AD fait avec le plan équatorial un angle α égal à 45°.

Dans la variante présentée avec le support de la figure 1, la face AB de la nervure de protection est rectiligne; bien entendu, cette face AB pourrait être de forme quelconque et notamment courbe. La nervure de protection qui est continue dans la direction circonférentielle avec la variante présentée avec la figure 1, pourrait également être discontinue. Cette même face AB peut être pourvue d'une pluralité de reliefs s'étendant dans une direction faisant un angle différent de zéro avec la direction circonférentielle à la manière de ce qui est décrit dans la demande internationale PCT 99/64258 déjà citée.

En outre, il est possible de mettre une nervure de protection sur chaque bourrelet (intérieur et extérieur) ou bien seulement sur l'un des deux (par exemple, du côté le plus exposé aux agressions par des objets externes).

Pour comparaison avec l'état de la technique, il a été tracé, en traits pointillés sur la figure 1, le contour externe F du bourrelet correspondant à la demande internationale PCT 99/64258. On note que dans le cas de l'invention la nervure de protection est radialement décalée par rapport à la saillie.

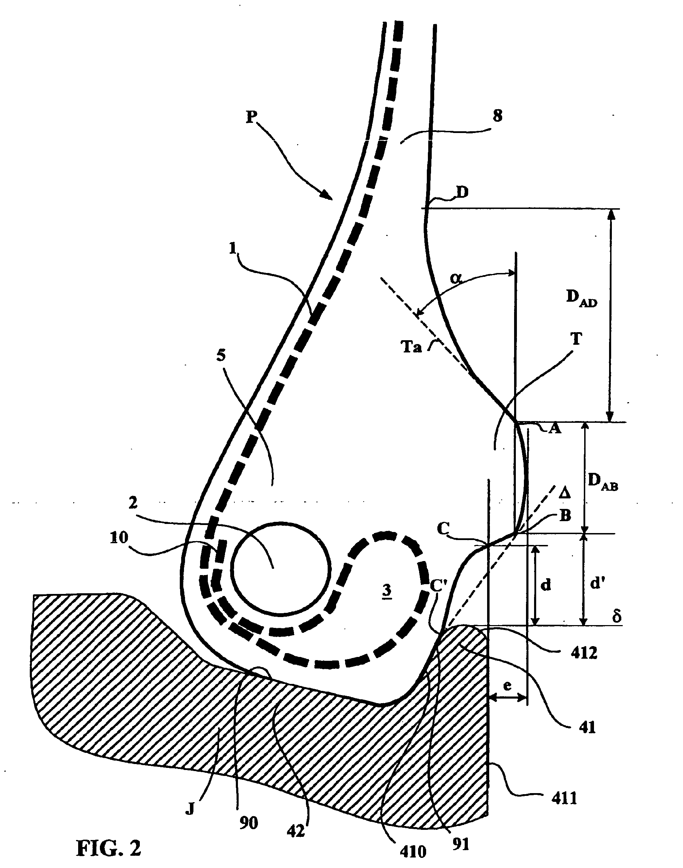

Sur la figure 2 on a représenté un bourrelet d'un pneumatique selon une autre variante de l'invention. Par souci de simplification, les références portées sur cette figure 2, dès lors qu'elles sont identiques à celles employées sur la figure 1, renvoient aux mêmes éléments de structure que ceux décrits avec le support de la figure 1.

Selon cette variante, le bourrelet 5 du pneumatique P comprend une armature de carcasse 1 ancrée autour d'une tringle 2 en allant de l'intérieur du pneumatique vers l'extérieur pour former une boucle autour d'un profilé de gomme 3 et former un retournement 10 axialement entre l'armature de carcasse 1 et la tringle 2 de bourrelet. Le bourrelet 5 représenté correspond au bourrelet situé côté extérieur véhicule du pneumatique monté sur sa jante de montage J. Cette jante J comprend des sièges 42 de jante inclinés vers l'extérieur et terminés axialement à l'extérieur par des saillies 41 contre lesquelles viennent en contact les pointes de bourrelet 5.

La saillie 41 de la jante comprend dans le prolongement du siège de jante 42, une première partie inclinée 410 sensiblement rectiligne se prolongeant elle même radialement à l'extérieur par une partie 412 en forme d'arc de cercle ; cette dernière partie 412 se raccorde axialement à l'extérieur à une face externe 411 sensiblement rectiligne et perpendiculaire à l'axe de rotation.

Afin de protéger la jante et en particulier la saillie 41 et sa face externe 411, le bourrelet 5 est pourvu d'une nervure de protection T dont les points axialement les plus éloignés de la face 411 sont à une distance e égale à 1.5 mm. Vu dans un plan de coupe méridien selon la figure 2, le profil, de la nervure de protection T comprend une face AB en forme d'arc de cercle prolongée radialement vers l'extérieur par un arc de cercle entre le point A et un point D situé à une distance D_{AD} égale à deux fois la distance D_{AB} mesurée dans la direction radiale entre les points A et B. La tangente Ta au point A audit profil en arc de cercle fait un angle α avec la direction radiale (direction perpendiculaire à l'axe de rotation) qui dans le cas présent est égal à 45°.

Par ailleurs, le profil AB de la nervure de protection T se prolonge radialement vers l'intérieur par un profil BC sensiblement linéaire (le point C étant obtenu comme l'intersection entre le profil du bourrelet radialement au dessous de la nervure T et une droite T1 perpendiculaire à l'axe de rotation et tangente à la face externe 411 de la saillie 41). Le point C est situé à une distance radiale d des points radialement les plus éloignés de la saillie 41 qui dans le cas présent est égal à 3 mm. Le point B est lui situé à une distance radiale d' égale à 4 mm du bord 412 de la saillie 41. Le profil de la face BC est radialement à l'extérieur d'une droite Δ passant par le point B et par le dernier point C' du bourrelet en contact avec la saillie (pneumatique gonflé).

La particularité de la variante de l'invention, outre la présence de la nervure de protection T, réside dans le fait que le profil du bourrelet 5 entre le point C' et le point C de raccord entre ledit bourrelet 5 et la nervure de protection T est formé de manière à prolonger le profil du bourrelet en contact avec la partie inclinée 410 de la saillie 41 sans qu'il y ait de contact sur la partie radialement à l'extérieur 412 de la saillie. Dans le cas montré, le profil entre C' et C est dans le prolongement du profil de la partie inclinée 410. Ainsi, la partie du bourrelet en contact avec la saillie 41 a la possibilité de se déplacer relativement à ladite saillie, ce qui permet audit bourrelet 5 de pivoter autour de sa tringle 2 créant ainsi une augmentation des efforts de coincement entre ladite tringle et le siège de jante 42.

Le profil du bourrelet entre C' et B est situé radialement à l'extérieur et axialement à l'intérieur d'une droite virtuelle Δ passant par lesdits points B et C'.

Cette dernière particularité (profil du bourrelet ne prenant pas appui sur la partie radialement externe de la saillie) peut bien sûr être mise en oeuvre sur le côté intérieur véhicule sans qu'il y ait besoin de prévoir une nervure de protection, l'effet bénéfique d'une telle disposition étant bien entendu conservé. Il va de soi que cette disposition ne nécessite pas l'emploi d'une nervure de protection de jante, toutefois, il est clair qu'un pneumatique susceptible d'être monté sur une jante telle que décrite sera préférentiellement doté d'une telle nervure de protection au moins du côté le plus sensible aux agressions externes.

## Revendications

1. Pneumatique (P) à armature de carcasse radiale (1), destiné à être monté sur une jante (J) dont au moins un siège (42) est incliné vers l'extérieur et prolongé axialement à l'extérieur par une saillie (41) de faible hauteur, ladite saillie comportant une paroi axialement extérieure (411), et comprenant deux flancs (8) et au moins un bourrelet (5) avec un talon axialement à l'interieur et une pointe de bourrelet axialement à l'extérieur, ledit bourrelet (5) étant pourvu d'une nervure de protection (T) s'étendant dans la direction circonférentielle ayant au moins un point axialement plus éloigné du plan équatorial que la paroi axialement extérieure de la saillie de la jante afin de protéger ladite jante, cette nervure de protection circonférentielle (T) étant délimitée axialement à l'extérieur par une face axialement externe (AB) reliée aux parois extérieures de flanc (8) et de bourrelet(5) par des faces (AD) et (BC) radialement respectivement supérieure et inférieure, ce pneumatique étant **caractérisé en ce que**, monté sur sa jante de montage et vu en coupe méridienne,
- le ou les points de la face axialement externe (AB) de la nervure de protection axialement le/les plus à l'extérieur est/sont à une distance (e) au moins égale a 0,5 mm par rapport a la paroi axialement extérieure de la saillie de la jante,
- la distance radiale (d') entre le point radialement le plus à l'intérieur de la face axialement externe de la nervure (T) et le point radialement le plus à l'extérieur de la saillie de jante est supérieure à 4 mm,
- l'angle du segment joignant les points d'extrémité de la face axialement externe de la nervure de protection avec une direction perpendiculaire à l'axe de rotation est au plus égal à ±10°,
- le profil de la face inférieure (BC) de raccordement entre la face axialement externe (AB) de la nervure de protection (T) et le profil de bourrelet (5) est en totalité situé radialement à l'extérieur d'un segment virtuel ayant pour extrémités d'une part, le point (B) radialement le plus à l'intérieur de la face axialement externe de la nervure de protection et d'autre part, le dernier point (C') du bourrelet du pneumatique en contact avec la saillie de la jante.

2. Pneumatique selon la revendication 1 **caractérisé en ce que** la distance (e) est comprise entre 1 et 1,5 mm.

3. Pneumatique selon la revendication 1 ou la revendication 2 **caractérisé en ce que** la longueur du segment joignant les points d'extrémité (A) et (B) de la face axialement extérieure (AB) de la nervure de protection (T) est comprise entre 5 et 10 mm.

4. Pneumatique selon l'une quelconque des revendications 1 à 3 **caractérisé en ce que** l'angle que fait le segment joignant les points d'extrémité (A) et (B) de la face axialement extérieure (AB) de la nervure de protection (T) avec une direction perpendiculaire à l'axe de rotation est au plus égal à ±5°.

5. Pneumatique selon l'une quelconque des revendications 1 à 4 **caractérisé en ce que** la face supérieure de raccordement (AD) entre la nervure (T) et le flanc (8) est située en totalité radialement à l'extérieur d'une droite (Ta) passant par le point (A) radialement le plus à l'extérieur de la face (AB) axialement à l'extérieur de la nervure de protection et tangente en ce point (A) audit profil et **en ce que** cette droite (Ta) fait un angle au plus égal a 55° avec le plan équatorial.

6. Pneumatique selon l'une quelconque des revendications 1 à 5 **caractérisé en ce que** les faces externes (AB, AD, BC) de la nervure de protection (T) sont renforcées avec au moins une armature comprenant un renfort de nature textile noyé dans un mélange de caoutchouc résistant à l'abrasion.

7. Pneumatique selon l'une des revendications 1 à 6 **caractérisé en ce que** le profil du bourrelet entre les points (C) et (C') est axialement à l'intérieur et radialement à l'extérieur d'une droite prolongeant le profil axialement interne (410) de la saillie (41), le point (C) étant le point de raccordement de la nervure de protection avec le bourrelet et le point (C') étant le dernier point du bourrelet en contact avec la partie inclinée (410) radialement à l'intérieur de la saillie (41) de la jante (J) de manière à éviter tout appui du bourrelet (5) sur la partie radialement externe (42) de la saillie (41).

## Patentansprüche

1. Luftreifen (P) mit einer radialen Karkassenbewehrung (1), der auf eine Felge (J) aufgezogen werden soll, bei der mindestens ein Sitz (42) nach außen geneigt ist und sich axial nach außen in einem Vorsprung (4) von geringer Höhe fortsetzt, wobei der Vorsprung eine axial äußere Wand (411) besitzt, und der zwei Flanken (8) und mindestens einen Wulst (5) mit einer axial innen liegenden Wulstbasis und mit einer axial außen liegenden Wulstspitze aufweist, wobei der Wulst (5) mit einer Schutzrippe (T) versehen ist, die sich in Umfangsrichtung erstreckt und mindestens einen Punkt aufweist, der in axialer Richtung von der Äquatorialebene weiter entfernt ist als die axial äußere Wand des Vorsprungs der Felge, um die Felge zu schützen, wobei die umlaufende Schutzrippe (T) axial außen durch eine axial äußere Fläche (AB) begrenzt wird, die über radial obere bzw. untere Flächen (AD) bzw. (BC) mit den axial äußeren Wänden der Flanke (8) und des Wulstes (5) verbunden ist, wobei der Luftreifen **dadurch gekennzeichnet ist, dass** auf seine Montagefelge montiert und im Meridianschnitt
- sich die Punkte oder der Punkt der axial äußeren Fläche (AB) der Schutzrippe, der/die axial am weitesten außen liegt/liegen, in einem Abstand (e) von mindestens 0,5 mm in Bezug auf die axiale äußere Wand des Vorsprungs der Felge befindet,
- der radiale Abstand (d') zwischen dem radial am weitesten innenliegenden Punkt der axial äußeren Fläche der Rippe (T) und dem radial am weitesten außenliegenden Punkt des Vorsprungs der Felge größer als 4 mm ist,
- der Winkel des Segments, das die Endpunkte der axial äußeren Fläche der Schutzrippe verbindet, mit einer Richtung senkrecht zur Drehachse höchstens ±10° beträgt,
- das Profil der unteren Verbindungsfläche (BC) zwischen der axial äußeren Fläche (AB) der Schutzrippe (T) und dem Profil des Wulstes (5) in radialer Richtung vollständig an der Außenseite eines virtuellen Segments liegt, das als Endpunkte einerseits den Punkt (B), der radial an der axial äußeren Fläche der Schutzrippe am weitesten innen liegt, und andererseits den letzten Punkt (C') des Wulstes des Luftreifens in Kontakt mit dem Vorsprung der Felge als Endpunkte aufweist.

2. Luftreifen nach Anspruch 1, **dadurch gekennzeichnet, dass** der Abstand (e) im Bereich von 1 bis 1,5 mm liegt.

3. Luftreifen nach Anspruch 1 oder nach Anspruch 2, **dadurch gekennzeichnet, dass** die Länge des Segments, das die Endpunkte (A) und (B) der axial äußeren Fläche (AB) der Schutzrippe (T) verbindet, im Bereich von 5 bis 10 mm liegt.

4. Luftreifen nach einem der Ansprüche 1 bis 3, **dadurch gekennzeichnet, dass** der Winkel, den das Segment, das die Endpunkte (A) und (B) der axial äußeren Fläche (AB) der Schutzrippe (T) verbindet, mit einer Richtung senkrecht zur Drehachse bildet, höchstens ±5° ist.

5. Luftreifen nach einem der Ansprüche 1 bis 4, **dadurch gekennzeichnet, dass** die obere Verbindungsfläche (AD) zwischen der Rippe (T) und der Flanke (8) vollständig radial außen an einer Geraden (Ta) liegt, die durch den radial am weitesten außen liegenden Punkt (A) der Fläche (AB) axial an der Außenseite der Schutzrippe hindurchgeht und das Profil in diesem Punkt (A) berührt, und dadurch, dass die Gerade (Ta) einen Winkel mit der Äquatorialebene bildet, der höchstens 55° beträgt.

6. Luftreifen nach einem der Ansprüche 1 bis 5, **dadurch gekennzeichnet, dass** die äußeren Flächen (AB, AD, BC) der Schutzrippe (T) mit mindestens einer Bewehrung verstärkt sind, die eine Verstärkung textiler Art umfasst, die in einer abriebfesten Kautschukmischung eingebettet ist.

7. Luftreifen nach einem der Ansprüche 1 bis 6, **dadurch gekennzeichnet, dass** das Profil des Wulstes zwischen den Punkten (C) und (C') axial innen und radial außen an einer Geraden liegt, die das axial innere Profil (410) des Vorsprungs (41) verlängert, wobei der Punkt (C) der Verbindungspunkt zwischen der Schutzrippe und dem Wulst ist und der Punkt (C') der letzte Punkt des Wulstes in Kontakt mit dem geneigten Bereich (410) radial an der Innenseite des Vorsprungs (41) der Felge (J) ist, so dass vermieden wird, dass der Wulst (5) an dem radial äußeren Bereich (42) des Vorsprungs (41) aufliegt.

## Claims

1. Tyre (P) with radial carcass reinforcement (1), intended for mounting on a rim (J) at least one of whose seats (42) is inclined outwards and is extended axially on the outside by a ridge (41) of small height, the said ridge comprising an axially outer wall (411), and comprising two sidewalls (8) and at least one bead (5) with a heel axially on the inside and a bead toe axially on the outside, the said bead (5) being provided with a protective rib (T) extending in the circumferential direction and having at least one point axially further away from the equatorial plane than the axially outer wall of the rim ridge in order to protect the said rim, this circumferential protective rib (T) being delimited axially on the outside by an axially outer face (AB) connected to the external sidewall (8) and the bead (5) by respective radially upper and lower faces (AD) and (BC), the tyre being **characterised in that**, when mounted on its mounting rim and viewed in meridian cross-section:
- the axially outermost point(s) of the axially outer face (AB) of the protective rib is/are a distance (e) at least equal to 0.5 mm further out than the axially outer wall of the ridge of the rim,
- the radial distance d' between the radially innermost point of the axially outer face of the rib (T) and the radially outermost point of the rim ridge, is larger than 4 mm,
- the angle of the segment joining the end points of the axially outer face of the protective rib relative to a direction perpendicular to the rotation axis is at most equal to ± 10°,
- the entire profile of the lower face (BC) connecting the axially outer face (AB) of the protective rib (T) and the profile of the bead (5) is located radially outside a virtual segment whose ends are on the one hand the radially innermost point (B) of the axially outer face of the protective rib and, on the other hand, the last point (C') of the tyre bead that is in contact with the ridge of the rim.

2. Tyre according to Claim 1, **characterised in that** the distance (e) is between 1 and 1.5 mm.

3. Tyre according to Claims 1 or 2, **characterised in that** the length of the segment joining the end points (A) and (B) of the axially outer face (AB) of the protective rib (T), is between 5 and 10 mm.

4. Tyre according to any of Claims 1 to 3, **characterised in that** the angle between the segment joining the end points (A) and (B) of the axially outer face 9A)B of the protective rib (T) and a direction perpendicular to the rotation axis, is at most equal to ± 5°.

5. Tyre according to any of Claims 1 to 4, **characterised in that** the entire upper connecting face (AD) between the rib (T) and the sidewall (8) is located radially outside a line (Ta) passing through the radially outermost point (A) of the face (AB) axially on the outside of the protective rib and tangential to the said profile at that point (A), and the line (Ta) makes an angle of at most 55° with the equatorial plane.

6. Tyre according to any of Claims 1 to 5, **characterised in that** the outside faces (AB, AD, BC) of the protective rib (T) are reinforced with at least one reinforcement comprising textile reinforcements embedded in an abrasion-resistant rubber mixture.

7. Tyre according to any of Claims 1 to 6, **characterised in that** the profile of the bead between the points (C) and (C') is axially inside and radially outside a line that extends the axially inner profile (410) of the ridge (41), the point (C) being the point where the protective rib joins the bead and the point (C') being the last point of the bead that is in contact with the inclined portion (410) radially on the inside of the ridge (41) of the rim (J), so as to avoid any contact between the bead (5) and the radially outer part (42) of the ridge (41).
